# EUROPEAN PATENT APPLICATION

(11) **EP 2 362 516 A1**
(43) Date of publication of application: **31.08.2011**
(21) Application number: 10154755.2
(22) Date of filing: 25.02.2010
(51) Int. Cl.: H02J 3/18

(54) **Device for reducing the power consumption of appliances**

(71) Applicant: Agterbos, Josephus Antonius Maria, 7573 EX Oldenzaal (NL)
(72) Inventor: Agterbos, Josephus Antonius Maria, 7573 EX Oldenzaal (NL)
(74) Representative: 't Jong, Bastiaan Jacob

(57) **Abstract**

The invention relates to a device (1) for reducing the power consumption of an electrical appliance, which device comprises:
- a power connection (4) for connection to mains electricity having at least a first (5) and second (6) terminal;
- an appliance connection (3) having at least a first (7) and second (8) terminal;
- a first lead (12) connected between the first terminal (5) of the power connection (4) and the first terminal (7) of the appliance connection (3);
- a second lead (13) connected between the second terminal (6) of the power connection (4) and the second terminal (8) of the appliance connection (3);
- detecting means (14) for detecting a current in one of the first (12) and second (13) leads;
- switching means (17) for switching a capacitor (18) between the first lead (12) and the second lead (13) to reduce the reactive load of a connected appliance.

## Description

The invention relates to a device for reducing the power consumption of an electrical appliance, which device comprises:
- a power connection for connection to mains electricity having at least a first and second terminal;
- an appliance connection having at least a first and second terminal;
- a first lead connected between the first terminal of the power connection and the first terminal of the appliance connection;
- a second lead connected between the second terminal of the power connection and the second terminal of the appliance connection.

Such a device is commonly known in different embodiments with different functions. One simple embodiment is an extension cord. Another embodiment is a timer, which switches the mains electricity to an appliance on and off depending on a set time interval.

Some appliances use more power than strictly necessary. This is due to a reactive load current, which is generated by for example an induction motor. The power required by the induction motor lags the phase of the voltage. As a result the average power used is higher, than would be necessary when the required power has the same phase as the voltage.

It is known in the prior art to apply capacitor control to reduce the effects of reactive load current. By arranging a capacitor over the electrical component causing the reactive load current, the lag in power consumption is compensated. The capacitor recharges when the required power is lower than the supplied power and the capacitor discharges when the required power is higher than the supplied power. As a result the power loss due to reactive load current is reduced.

Indirectly capacitor control also results in longer equipment lifetimes because of reduced equipment stresses.

The disadvantage of the known capacitor control is that an appliance has to be disassembled to arrange a capacitor of suitable size in order to improve the power consumption of an appliance.

When the appliance is kept plugged in even when the appliance is shutoff, the capacitor will consume energy as it will recharge and discharge following the phase of the voltage.

It is now an object of the invention to reduce the above mentioned disadvantages.

This object is achieved according to the invention by a device according to the preamble, which is characterized by
- detecting means for detecting a current in one of the first and second leads;
- switching means for switching a capacitor between the first lead and the second lead to reduce the reactive load of a connected appliance.

The device according to the invention can arranged in between the mains electricity and the electrical appliance. It will detect whether the appliance is switched on and requires current. The device will then switch a suitable capacitor between the two leads in order to reduce the reactive load. As soon as the appliance is switched off or goes in to a sleeping mode, requiring no or a minimal amount of power, the switching means will remove the capacitor from the leads, such that no undesired power leak will occur.

In an embodiment of the device according to the invention, the detecting means comprise a transformer with the primary winding arranged in one of the first and second leads and the secondary winding connected to the switching means. As soon as the appliance draws power, a current will occur in the leads and thus in the primary winding, which will generate in turn a current in the second winding. This current in the second winding of the transformer is used to switch on or of the capacitor. The advantage is that with the transformer, the detecting means are fully galvanic separated from the main connection of the appliance to the mains electricity. This increases the safety of the device.

Preferably the device according to the invention comprises a convertor connected to the secondary winding for transforming an alternating current in the secondary winding to a direct current for controlling the switching means.

In a preferred embodiment of the device according to the invention the switching means comprise a relay for connecting or disconnecting a capacitor in between the first lead and second lead. With a relay is possible to switch with a small current, while the current over the capacitor can be high.

In another embodiment of the invention a number of capacitors can be switched between de first lead and second lead depending on the detected current. With this embodiment it is for example possible to arrange a small capacitor between the first and second leads, when the reactive load current is small and a bigger capacitor for higher reactive load.

A very preferred embodiment of the device comprises a housing with on one side an electrical plug connected to the first and second terminal of the power connection and on the opposite side a electrical socket connected to the first and second terminal of the appliance connection. This embodiment of the device according to the invention can be used for virtually any appliance as it can be arranged between a wall socket and the electrical plug of the appliance.

Preferably, the device according to the invention comprises an indicator for indicating the status of the device. With this indicator a user can observe when the device is in use or not.

In yet another embodiment of the device according to the invention the appliance connection and the power connection have at least three terminals and wherein the mains electricity is high voltage current. The high voltage current is typically a three phase network of 400 Volts. In this case a capacitor is preferably switched between each pair of terminals. So with a three phase network, there will be three capacitors switched between the three terminals.

These and other features of the invention will be elucidated in conjunction with the accompanying drawings.
Figure 1 shows an embodiment of a device according to the invention.
Figure 2 shows a functional diagram of the device according to figure 1.
Figure 3 shows a more detailed functional diagram of the device according to figure 1.

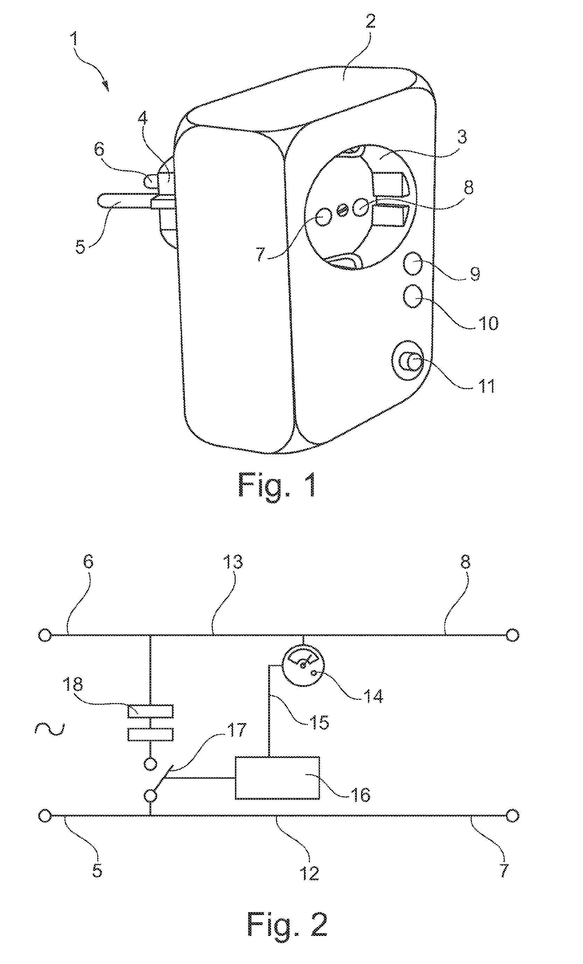

Figure 1 shows an embodiment of a device 1 according to the invention. This device 1 has a housing 2 in which a socket 3 is arranged and on the opposite side a electrical plug 4 is attached. The plug 4 has two terminals 5, 6, while the socket 3 has two terminals 7, 8. A power cord of an appliance can be plugged in the socket 3, while the plug 4 can be inserted in a socket providing mains electricity.

Two LED lights 9, 10 are arranged at the front of the housing 2 to provide an indication of the status of the device 1. Furthermore a fuse 11 is arranged at the front to provide a safety in case of malfunction of the device 1.

Figure 2 shows a basic functional diagram of the device 1. It is clear from figure 2, that the terminal 5 of the plug is directly connected to the terminal 7 of the socket 3 by a first lead 12. The terminal 6 of the plug is directly connected to the terminal 8 of the socket 3 by the second lead 13.

Detection means 14, which are schematically depicted as a dial, measure the current flowing through the second lead 13. If the current in the lead 13 reaches a certain value, a signal is sent through lead 15 to a relay 16, which closes a switch 17 and connects a capacitor 18 between the first lead 12 and the second lead 13.

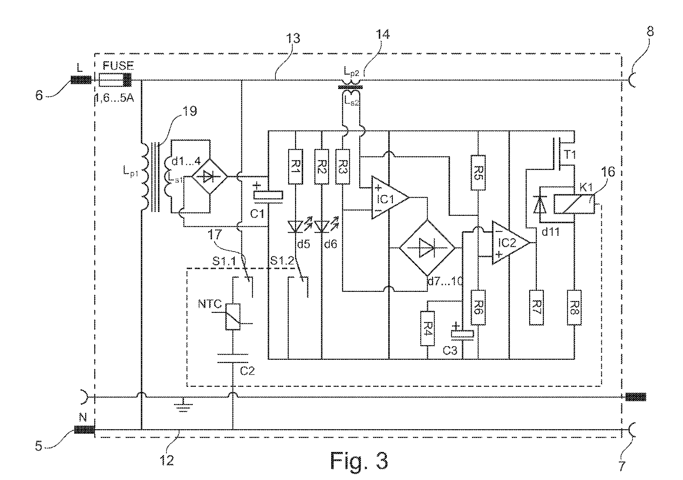

Figure 3 shows a more detailed functional diagram. When an appliance is connected to the terminals 7 and 8 and the device 1 is connected to the mains electricity by terminals 5, 6 a direct current will be generated over capacitor C1. This direct current is generated by transformer 19. As a result the LED D6 will light up. The transformer 19 can be protected against short circuiting or high voltage through a PTC thermistor or a fuse.

When the electrical appliance starts to draw current through lead 13 a current will be generated in primary winding Lp2, which will provide a voltage in secondary winding Ls2. This voltage is converted to direct current by d7-d10, flattend by capacitor C3 and supplied to the comparator IC2. The voltage from the secondary winding Ls2 is also superposed on the voltage divider R5-R6 and supplied to the comparator IC2.

The voltage from the convertor D7 - D10 will be lower causing the output of the comparator to drop to zero. As a result the gate of T1 will block and power the relay K1 such that the switches S1.1/17 and S1.2 close.

In this new state the LED D5 will light and connect the capacitor C2 between the leads 13 and 12 to compensate the reactive load of the appliance.

When the appliance stops to draw current, no current or minimal current will flow through the primary winding Lp2 resulting in loss of voltage in secondary winding Ls2. The output of the combination of IC1 and D7-D10 will drop to zero.

The capacitor C3, which will be charged at that instant, will discharge over R4 to zero Volts. During this process of discharging, the output of comparator IC2 gets high enabling K1 through T1 to be powered to open the switches S1.1 and S1.2. The LED D5 will be powered off.

The result of this device 1 according to the invention is that the reactive load of the appliance is reduced and the power usage of the device is kept minimal.

## Claims

1. Device for reducing the power consumption of an electrical appliance, which device comprises:
- a power connection for connection to mains electricity having at least a first and second terminal;
- an appliance connection having at least a first and second terminal;
- a first lead connected between the first terminal of the power connection and the first terminal of the appliance connection;
- a second lead connected between the second terminal of the power connection and the second terminal of the appliance connection;
**characterized by**
- detecting means for detecting a current in one of the first and second leads;
- switching means for switching a capacitor between the first lead and the second lead to reduce the reactive load of a connected appliance.

2. Device according to claim 1, wherein the detecting means comprise a transformer with the primary winding arranged in one of the first and second leads and the secondary winding connected to the switching means.

3. Device according to claim 2, comprising a convertor connected to the secondary winding for transforming an alternating current in the secondary winding to a direct current for controlling the switching means.

4. Device according to any of the preceding claims,
wherein the switching means comprise a relay for connecting or disconnecting a capacitor in between the first lead and second lead.

5. Device according to any of the preceding claims,
wherein a number of capacitors can be switched between de first lead and second lead depending on the detected current.

6. Device according to any of the preceding claims, comprising a housing with on one side an electrical plug connected to the first and second terminal of the power connection and on the opposite side a electrical socket connected to the first and second terminal of the appliance connection.

7. Device according to any of the preceding claims comprising an indicator for indicating the status of the device.

8. Device according to any of the preceding claims,
wherein the appliance connection and the power connection have at least three terminals and wherein the mains electricity is high voltage current.
